Europäisches Patentamt

European Patent Office

Office européen des brevets

(19)

(11) Veröffentlichungsnummer : **0 109 529**
**B1**

(12) **EUROPÄISCHE PATENTSCHRIFT**

(45) Veröffentlichungstag der Patentschrift :
25.03.87

(51) Int. Cl.⁴ : **F 24 J   2/48, C 23 C 18/34**

(21) Anmeldenummer : 83110117.5

(22) Anmeldetag : 11.10.83

(54) Schwarz-metallisierte Substratoberflächen.

(30) Priorität : 22.10.82 DE 3239090

(43) Veröffentlichungstag der Anmeldung :
30.05.84 Patentblatt 84/22

(45) Bekanntmachung des Hinweises auf die Patenterteilung : 25.03.87 Patentblatt 87/13

(84) Benannte Vertragsstaaten :
BE CH DE FR GB IT LI

(56) Entgegenhaltungen :
EP-A- 0 018 219
DE-A- 2 743 768
DE-A- 3 025 307
DE-A- 3 047 703
US-A- 3 424 597
US-A- 3 903 319
SOLAR ENERGY, Band 19, Nr. 3, 1977, Seiten 271-276, Pergamon Press, GB, E.M. LUSHIKU et al.: "Ellipsometry in the study of selective radiation-absorbing surfaces"
"J. Vac. Sci. Technol.", vol. 12, no. 1, Jan./Febr. 1975, S. 174-181

(73) Patentinhaber : BAYER AG
Konzernverwaltung RP Patentabteilung
D-5090 Leverkusen 1 Bayerwerk (DE)

(72) Erfinder : Sirinyan, Kirkor, Dr.
Humperdinckstrasse 12
D-5068 Bergisch-Gladbach 2 (DE)
Erfinder : Merten, Rudolf, Dr.
Berta-von-Suttner-Strasse 55
D-5090 Leverkusen (DE)
Erfinder : Giesecke, Henning, Dr.
Düsseldorfer Strasse 49
D-5000 Koeln 80 (DE)

**Beschreibung**

Gegenstand der Erfindung sind flächenförmige schwarz-metallisierte Substrate sowie deren Herstellung und Verwendung als Kollektoren für Sonnenlicht.

Als Kollektoren für Sonnenlicht können neben mit Metalloxiden beschichteten Substraten Aluminium- oder Stahlfolien sowie mit Ruß oder anderen schwarzen Farbstoffen pigmentierte Kunststoffolien eingesetzt werden. Die mit Ruß oder anderen schwarzen Farbstoffen pigmentierten Kunststoffolien haben den Nachteil, daß sie die einfallenden Lichtstrahlen im gesamten Wellenlängenbereich absorbieren und somit einen geringen Wirkungsgrad bezüglich der Umwandlung der Lichtenergie in Wärme haben. Aluminium- und Strahlfolien andererseits reflektieren einen zu großen Anteil des einfallenden Lichts und haben deswegen ebenfalls einen geringen Wirkungsgrad.

Wesentlich wirkungsvoller bezüglich der Umwandlung von Licht in Wärme sind sogenannte « schwarze » Metall- oder Metalloxidschichten. Dabei bedeutet « schwarz », daß diese Schichten im wesentlichen nicht metallisch glänzend sind.

Diese Eigenschaft wird durch ein bestimmtes Verhalten der Absorption elektromagnetischer Strahlung erzeugt. So berichten A. Aveline und I.R. Bonilla in Solar Energy Materials 5 (1981), 211 bis 220 über Oberflächen aus Kupferoxid (Cu$_2$O) die auf umständliche Weise durch teilweise Oxidation von Kupferoberflächen erzeugt werden. G. B. Smith und A. Ignatiev, Solar Energy Materials 4 (1981), 119 bis 133 beschreiben schwarze Chrom-Molybdänoberflächen, die als Solarabsorber geeignet sind. Diese werden nach einem galvanischen Verfahren gewonnen, wobei die Chrom-Molybdänabscheidung nur auf einer elektrisch leitenden Unterlage durchgeführt werden kann. Die so erhaltenen Überzüge haben den Nachteil, daß sie eine von der Geometrie des Trägers abhängige Schichtdicke aufweisen. Aus diesem Grund muß man zur vollständigen Beschichtung von größeren Flächen mehrere Mikrometer starke Auflagen abscheiden.

Das gleiche gilt für die in « Solar Energy », Band 19, 1977, Seite 271-276 erwähnten galvanisch abgeschiedenen Beläge aus « black nickel », wobei es sich tatsächlich jedoch um Nickelsulfid/Zinksulfid-Mischungen handelt siehe « J. Vac. Sci. Technol. », Vol. 12, N° 1, Jan./Febr., 1975, Seite 174-181. Auch die von Kudryashova (vgl. ebenfalls « Solar Energie » *19*, 271) beschriebene Herstellung von « pure nickel films » (wobei es sich offenbar um metallisch glänzende Ni-Auflagen handelt) durch Vakuumbedampfung ist technisch sehr aufwendig, da zur Erzielung optimaler Ergebnisse ganz bestimmte Schichtdicken erzeugt werden müssen.

Aufgabe der Erfindung war es nun, « schwarze » Flächengebilde bereitzustellen, die die vorstehend genannte Nachteile nicht aufweisen.

Diese Aufgabe wird durch die Zurverfügungstellung solcher flächenförmiger Substrate gelöst, die eine 0,01 bis 2 μm starke schwarze Metallschicht aus Cu, Co oder Ni aufweisen und durch eine Reflexion elektromagnetischer Strahlung im Wellenlängenbereich von 200 bis 5 000 nm von höchstens 20 % und im Wellenlängenbereich von 7 000 bis 24 000 nm von mindestens 50 % gekennzeichnet sind, wobei die Prozentangaben sich auf den Mittelwert über den gesamten jeweiligen Wellenlängenbereich beziehen.

Diese schwarz metallisierten Substratoberflächen werden dadurch erhalten, daß man die zu metallisierenden in üblicher Weise mit Metallen der 1. oder 8. Nebengruppe aktivierten Substrate einer stromlosen, naßchemischen Metallisierung in an sich bekannten Metallisierungsbädern, die zusätzlich eine polymere organische oberflächenaktive Verbindung mit einem Molekulargewicht von mindestens 400 enthalten, unterwirft.

Unter polymeren organischen Verbindungen sind anionische, kationische oder neutrale Dispersionen, Emulsionen und Latices bzw. deren Mischungen zu verstehen, die in Mengen von 0,1-10 g/l homogen in den Metallisierungsbädern verteilt werden. Solche Zusatzstoffe, die in wäßrigen Medien völlig oder teilweise quellbar sind, sind besonders bevorzugt zur Durchführung des erfindungsgemäßen Verfahrens geeignet. Um zwischen der schwarz zu metallisierenden Substratoberfläche und den zu reduzierenden Metallionen bzw. Reduktionsmitteln im chemischen Metallisierungsbad eine bessere Wechselwirkung zu erzielen bzw. die Haftung der Schwarz-Metallauflage an der Substratoberfläche zu vergrößern, sind besagte polymere Zusatzstoffe mit funktionellen Gruppen besonders bevorzugt verwendbar.

Solche funktionellen Gruppen sind beispielsweise Carbonylgruppen wie Aldehyd-, Keto-, Carbonsäure-, Carbonester-, Carbonsäuredichlorid-, Carbonamid-, Carbonimid-Gruppen, und/oder SO$_2$-Gruppen wie Sulfon, Sulfonsäure-, Sulfonester-, Sulfochlorid- oder Sulfonamid-Gruppen und/oder Aminogruppen und/oder Alkoholgruppen und/oder Ethergruppen und/oder Mercapthangruppen.

Damit eine Koagulation der zur Durchführung des erfindungsgemäßen Verfahrens geeigneten Latices, Dispersionen und Suspensionen verhindert wird, können sie und/oder die eingesetzten Metallisierungsbäder mit Stabilisatoren und Emulgatoren versetzt werden. Hierzu sind anionische Emulgatoren wie z. B. Alkalisalze von Palmitinsäure, Stearinsäure, Ölsäure, Natriumsalze von Sulfonsäuren, die auf der Basis von 6-20 Kohlenstoff-Atome enthaltenden Paraffinen durch Sulfochlorierung hergestellt werden ; nichtionogene Emulgatoren, die beispielsweise durch Ethoxylierung von langkettigen Alkoholen oder Phenolen herstellbar sind, kationische Emulgatoren, wie z. B. Salze langkettiger besonders ungesättigter Amine mit 12 bis 20 C-Atomen oder quarterne Ammoniumverbindungen mit langkettigen Olefinen oder Parafinestern ; Schutzkolloide auf der Basis von makromolekularen Verbindungen, wie z. B. Gelatine, Pektine, Aginate, Methylcellulose, Polyvinylalkohole, Polyvinylpyrrolidon, Polymethylvinylacetat, feinverteilte wasserlösliche Mineralien wie Tonerde, Kieselgur, Calciumphosphate gut geeignet.

Die Menge der oben aufgeführten Stabilisatoren bzw. Emulgatoren kann bezogen auf trockene polymere Zusatzstoffe von 0,01-15 Gew.-% variiert werden, wobei 0,1-2,0 Gew.-% besonders bevorzugt ist.

Bevorzugt einzusetzende polymere Verbindungen sind Latices und/oder Emulsionen auf der Basis von Styrol-Butadien- und/oder Acrylnitril-Propf- und Copolymerisaten, Polyisopren, Homo- und/oder Copolymerisaten, Polyacrylester, Polyvinylchlorid, Polyvinylacetat, anionische, neutrale und kationische Polyurethandispersionen bzw. deren Gemische.

Eine weitere besonders bevorzugte Ausführungsform des erfindungsgemäßen Verfahrens zum Schwarz-Metallisieren von Substratoberflächen ist dadurch gekennzeichnet, daß die Oberflächen von Polymerkörpern mit den oben genannten organischen Polymeren, Dispersionen, Latices, Emulsionen, die in wäßrigen Lösungen quellbar sind, durch Tauchen, Bedrucken, Bespritzen beschichtet und nach dem teilweise oder völligen Entfernen des Lösemittels in üblichen chemischen Metallisierungsbädern mit einer schwarzen Metallschicht metallisiert werden.

Zur Durchführung dieser erfindungsgemäßen Verfahrensvariante sind die oben erwähnten Polymeren mit zusätzlichen funktionellen Gruppen besonders gut geeignet.

Neben den schon erwähnten Latices, Dispersionen und Emulsionen kommen noch in Wasser quellbare makromolekulare Verbindungen, die als homogene Schicht auf die schwarz zu metallisierende Substratoberfläche aufgebracht werden, in Betracht, wobei Gelatine, Pektine, Polymethylcellulose, Polyvinylalkohole, Polymethylvinylacetat, Polyvinylpyrrolidon besonders bevorzugt eingesetzt werden. Die Dicke von diesen den zu reduzierenden Metallionen zugänglichen Beschichtungen sollte 0,01-20 μm betragen.

Als Substrate für das erfindungsgemäße Verfahren eignen sich ; Stähle, Glas, Aluminium, Kupfer, Silber, Gold, Platin, Keramik, Papier, Polyethylen, Polypropylen, Polyvinylhalogenide, Epoxidharze, Polyester, Polyamide, Polyhydantoin, ABS-Pfropf- bzw. Co-Polymerisate, Asbest, textile Flächengebilde, Fäden und Fasern. Insbesondere sind mit schwarzem Metall metallisierte Temperaturbeständige Substrate beispielsweise aus Cu, Al, Fe zur Herstellung konzentrierender Sonnenkollektoren gut geeignet. Bei diesem Kollektortyp werden im Gegensatz zu Flachkollektoren die einfallenden Sonnenstrahlen auf einen im Brennpunkt des Spiegelsystems angeordneten Absorber konzentriert, wobei sehr hohe Temperaturen auftreten : aus diesem Grunde sind zur Herstellung von solchen Absorbern wärmestabile Substrate auf der Basis von beispielsweise Metall geeignet.

Die Art der Aktivierung zur chemischen Metallisierung von Substratoberflächen ist für die Durchführung des erfindungsgemäßen Verfahrens nicht von großem Einfluß. So sind sowohl ionogene und/oder kolloidale Elemente der 1. und 8. Nebengruppe des Periodensystems wie Palladium und Silber als auch ihre metallorganischen Derivate geeignet.

Auch Gemische der angegebenen Aktivatoren können verwendet werden. Sind die Aktivatoren in Lösemitteln gelöst, so soll im allgemeinen die Konzentration zwischen 0,01-10 g pro Liter betragen. Als Lösungsmittel sind sowohl Wasser als auch organische polare, protische und aprotische Lösemittel wie Methylenchlorid, Chloroform, Aceton, 1,1,1-Trichlorethan, Alkohole, Perchlorethylen geeignet.

Zur Reduktion der Metallionen in der Metallisierungsbädern werden die in der Galvanotechnik üblichen Reduktionsmittel wie Hydrazinhydrat, Formaldehyd, Hypophosphit oder Borane verwendet. Bevorzugt ist die. Schwarz-Metallisierung in wäßriger Lösung.

Es ist zwar bekannt, Substratoberflächen nach der Aktivierung mit Metallen der ersten und achten Nebengruppe des Periodensystems der Elemente stromlos, naßchemisch zu metallisieren (beispielsweise nach DE-A-27 43 768 und DE-A-30 25 307), jedoch enthalten die dort benutzten Aktivierungs- bzw. Metallisierungsbäder weder oberflächenaktive Verbindungen mit einem Molekulargewicht von mindestens 400 noch Quellmittel für die Substratoberflächen, so daß keine « schwarzen » Metalloberflächen, wobei « schwarz » durch die vorstehende Reflexionscharakteristik definiert ist, sondern metallisch glänzende Oberflächen, die über den gesamten Wellenlängenbereich weitgehend gute Reflexionseigenschaften aufweisen, erhalten werden.

Die Erfindung wird durch die nachfolgenden Beispiele näher erläutert.

Beispiel 1

Eine Polyamidfolie (200 × 200 × 0,5 mm) wurde in einem Aktivierungsbad aus 0,7 g 4-Cyclohexen-1,2-dicarbonsäureanhydrid-palladium(II)-chlorid und 1 ltr. $CH_2Cl_2$ im Verlauf von 2 Minuten bei RT (Raumtemperatur) aktiviert. Nach dem Verdampfen des Lösemittels wird die Folie in 2,5 ltr. eines in der Galvanotechnik üblichen chemischen Nickelbades (S. R. Weiner, « Chemische Vernickelung », Eugen G. Lenze Verlag (1974)), welches aus $NiSO_4$, Dimethylaminoboran, Citronensäure und Wasser angesetzt, mit wäßriger Ammoniaklösung auf einen pH-Wert von ca. 8,2 eingestellt und anschließend mit 125 ml wäßriger, anionischer 50 gew.-%iger Dispersion versetzt wird, bei RT metallisiert. Die o. a. Dispersion besteht aus 38 Gew.-% Polyester auf der Basis von Adipinsäure, Hexandiol mit der mittleren Molmasse 1700, 8 Gew.-% Isophorondiamin, 4 Gew.-% Isophorondiisocyanat. Bereits nach 0,5 Minuten hat sich die

3

**0 109 529**

Folienoberfläche schwarz gefärbt. Die schwarze Nickelschicht erreicht nach einer Metallisierungszeit von ca. 15 Minuten eine Schichtdicke von ca. 0,2 μm, hat eine rauhe, körnige Oberfläche und einen elektrischen Widerstand von ca. 0,8 Ω. Diese schwarze Ni-Schicht weist nahezu ideale Absorptions- und Reflexionseigenschaften gegenüber einfallenden Lichtstrahlen auf und ist somit zur Herstellung von Sonnenkollektoren gut geeignet. Da diese Schicht infrarotstrahlungsundurchlässig ist, ist sie darüber hinaus für landwirtschaftliche Zwecke geeignet.

Aus der ESCA (electronspectroscopie analysis)-Daten geht hervor, daß diese Metallschicht neben metallischem Nickel noch aus ihren Borderivaten bzw. Oxiden besteht. Ihr Mikrowellen-Transmissions- und Reflexionsverhalten bei 2,6-3,9 und 9 bis 10 GHz (Radarbänder) kann aus der u. a. Tabelle entnommen werden.

Meßwerte der Schirmdämpfung T und Reflexionsverluste R in db

| Muster | Frequenzbereiche | 2,6-3,9 GHz | | 9-10 GHz | |
|---|---|---|---|---|---|
| | | T | R | T | R |
| schwarzes Nickel | | 21 | 0,75 | – | –*) |
| dto. 45x45 cm | | 20-22 | 0,3-1 | 20-23 | – |
| dto. 45x45 cm | | 22-23 | 0,6 | 17-19 | – |

*) Abmessung zu klein

Beispiel 2

Eine Polyesterfolie mit den Maßen von 200 × 200 × 0,5 mm wurde in dem in Beispiel 1 aufgeführten Aktivierungsbad aktiviert. Nach dem Trocknen des Lösemittels wird die Folie in einem chemischen Co-Ni-Bad, welches neben den im Beispiel 1 angegebenen Komponenten noch 8 Gew.-% Kobalt enthält und auf einen pH-Wert von ca. 7,2 eingestellt wird, metallisiert.

Bereits nach 30 Sekunden wird eine Schwarzfärbung der Folie beobachtet. Sie kann im Laufe von 15 Minuten mit einer ca. 0,22 μm starken Schwarz-Metallschicht metallisiert werden. Aus den ESCA-Daten geht hervor, daß diese Schicht sowohl aus metallischem Nickel als auch aus Kobalt bzw. deren Boride und Oxide besteht.

Diese Metallschicht hat eine körnige, und rauhe Oberfläche ist lichtstrahlenundurchlässig. Ihre Absorptions- bzw. Reflexionseigenschaften sind mit der im Beispiel 1 aufgeführten Folie nahezu identisch.

Beispiel 3

Ein 100 × 100 mm großes Quadrat einer polierten Kupferfolie wird 60 Sekunden gemäß Beispiel 1 zur chemischen Metallisierung aktiviert, bei RT getrocknet und 15 Minuten gemäß Beispiel 1 in einem chemischen Nickelbad vernickelt.

Man erhält eine schwarz-metallisierte Cu-Folie mit einer ca. 0,2 μm starken Metallauflage.

Beispiel 4

Ein 100 × 100 mm großes Quadrat einer Polyamidfolie wird gemäß Beispiel 1 zur chemischen Metallisierung aktiviert, bei RT getrocknet und 15 Minuten in 2,5 ltr. eines in der Galvanotechnik üblichen chemischen Kobaltbades, welches aus $CoSO_4$, Dimethylaminoboran, Citronensäure, Stabilisator und Wasser angesetzt und anschließend mit 65 ml 30 gew.-%iger wäßriger Dispersion versetzt wird, bei RT metallisiert. Die oben angegebene Dispersion besteht aus 5,4 Gew.-% Phthalsäureethandiolpolyester mit der mittleren Molmasse von 200, 16,3 Gew.-% eines difunktionellen Polyesters 4,9 Gew.-% Hexamethylendiisocyanat, 1,1 Gew.-% Diethanolamin, 1,2 Gew.-% n-Methyldiethanolamin, 0,7 Gew.-% Phosphorsäure (85 gew.-%ig) und 0,5 Gew.-% Formaldehyd.

Nach 7 Minuten war eine haftende, schwarze ca. 0,13 μm starke Kobaltschicht abgeschieden worden. Diese Schicht ist lichtstrahlundurchlässig.

Beispiel 5

Ein 200 × 200 mm großes Quadrat einer Polyesterplatte wird gemäß Beispiel 1 aktiviert, nach dem Verdampfen des Lösemittels in 2,0 ltr. eines handelsüblichen, chemischen Nickelbades, welchem 100 ml der in Beispiel 1 aufgeführten Dispersion zugefügt wurde, metallisiert.

Bereits nach ca. 30 Sekunden beginnt sich die Oberfläche der Platte dunkel zu färben und nach 6

4

Minuten war eine schwarze, körnige Nickelschicht abgeschieden worden. Ihr Oberflächenwiderstand ist 1,9 Ω. Ihre Absorptions- und Reflexionseigenschaften sind mit der im Beispiel 1 aufgeführten Folie identisch.

## Beispiel 6

Ein 150 × 150 mm großes Quadrat einer ABS-Platte wurde mit einer herkömmlichen kolloidalen, salzsauren Palladium(II)-chloridlösung behandelt, die an der Polymeroberfläche fixierten Palladiumkeime in einem weiteren in der Galvanotechnik üblichen Zinn(II) chloridbad sensibilisiert und dann in 2,5 ltr. eines handelsüblichen Nickelbades, welchem 95 ml der im Beispiel 1 angegebenen Dispersion zugesetzt wurde, bei RT metallisiert.

Die Plattenoberfläche beginnt sich nach ca. 30 Sekunden dunkel zu färben, nach 90 Sekunden ist das Gut mit einer schwarzen, feinkörnigen, lichtundurchlässigen Nickelschicht bedeckt und nach ca. 5 Minuten hat es einen elektrischen Widerstandswert von 1,9 Ω und seine Menge beträgt ca. 3,4 g/m².

## Beispiel 7

Ein 150 × 50 mm großes Rechteck eines mit Polybutadien modifizierten Polyamidkunststoffteiles wird in die im Beispeil 1 aufgeführte Dispersion getaucht, nach dem teilweisen Entfernen des Wassers bei 40 °C gemäß Beispiel 1 aktiviert und anschließend in einem chemischen Nickelbad, welches im Beispiel 1 angegeben wird, metallisiert.

Bereits nach 45 Sekunden ist das Gut mit einem feinen, körnigen Schwarz-Nickel bedeckt und nach ca. 6 Minuten hat die chemische Schwarz-Nickelauflage eine Stärke von ca. 0,1 μm.

## Beispiel 8

Ein 200 × 200 mm großes Quadrat eines Polyethylenkunststoffteiles wirde in einem Aktivierungsbad, welches aus 0,75 g 9-Octadecen-1-olpalladiumdichlorid und 1 ltr. 1,1,1-Trichlorethan angesetzt wird, im Verlaufe von 45 Sekunden aktiviert.

Das Gut wird in einem chemischen Nickelbad, welches gemäß Beispiel 1 angesetzt und mit 140 ml Polybutadienlatex versetzt wird, metallisiert.

Der o. a. Latex hat einen mittleren Teilchendurchmesser von 0,26 μm, einen 31,45 Gew.-%igen Feststoffgehalt 3 Carboxylierungsmittel [Teile/100 Teile Butadien].

Bereits nach 25 Sekunden wird eine Schwarzfärbung des Probekörpers beobachtet. Er konnte im Laufe von 5 Minuten mit einer ca. 0,08 μm starken chemischen Schwarz-Nickelauflage metallisiert werden.

## Beispiel 9

Aus 25 ml Polybutadienlatex, welcher als wäßrige Dispersion vorliegt und aus 31,5 Gew.-% Feststoff mit 100 %igem Gelgehalt besteht, einen pH-Wert von ca. 6,6 und einen mittleren Teilchendurchmesser von 0,285 μm hat, werden durch Gießen auf Glasplatten Folien (40 × 80 mm) hergestellt.

Die Folien werden bei 50 °C 8 h im Trockenschrank getempert und dann gemäß Beispiel 1 aktiviert und in einem chemischen Nickelbad vernickelt.

Nach 5-8 Minuten nimmt die Polymeroberfläche bzw. Polymermatrix ein feinverteiltes schwarzes Nickel auf.

## Beispiel 10

Ein 100 × 100 mm großes Rechteck einer Polyvinylchloridplatte wird mit einer 8 gew.-%igen wäßrigen Gelatinelösung beschichtet, nach dem Verdampfen des Lösemittels wird die Platte in einem Aktivierungsbad, welches aus 0,8 g 4-Cyclohexen-1,2-dicarbonsäureanhydrid-palladium(II)chlorid und 1 ltr. Ethanol angesetzt wird, im Verlaufe von 30 Sekunden aktiviert und in einem im Beispiel 1 aufgeführten Metallisierungsbad metallisiert.

Nach 50 Sekunden nimmt die Polymeroberfläche feinverteiltes Schwarz-Nickel auf.

## Beispiel 11

Eine 100 × 100 mm große Dialysefolie auf der Basis von Celluloseacetat wird gemäß Beispiel 1 aktiviert bzw. schwarzmetallisiert.

Man bekommt im Verlaufe von 5 Minuten eine lichtundurchlässige schwarz metallisierte Folie.

## Beispiel 12

Eine 0,5 × 200 × 200 mm große glasfaserverstärkte Kunststoffplatte aus Polyamid 6,6 wird in einem Bad aus 600 g HCl (37 %ig reinst), 15 g CaCl$_2$, 500 g Methanol und 7,8 g Butadienpalladiumdichlorid bei 40 °C 15 Minuten behandelt und mit destilliertem Wasser gewaschen. Dabei ändert sich die Plattenoberfläche so, daß eine ca. 20 μm tiefe angequollene den Metallionen zugängliche, diffuse bzw. aktivierte Schicht entsteht. Die Platte wird anschließend in einem üblichen, dimethylaminoboranhaltigen Nickelbad bei RT metallisiert. Bereits nach 30 Sekunden kann eine Schwarzfärbung beobachtet werden. Der Probekörper ist nach 5 Minuten mit einer durchgehenden schwarzen Ni-Auflage beschichtet.

**Patentansprüche**

1. Flächenförmige Substrate mit einer schwarz-metallisierten Oberfläche, dadurch gekennzeichnet, daß diese Oberfläche eine 0,01 bis 2 μm starke schwarze Schicht aus Kupfer, Kobalt oder Nickel darstellt, die eine Reflexion der elektromagnetischen Strahlung im Wellenlängenbereich von 200 bis 5 000 nm von höchstens 20 % und im Wellenlängenbereich von 7 000 bis 24 000 nm von mindestens 50 % aufweist, wobei sich die Prozentangaben auf den Mittelwert über den gesamten jeweiligen Wellenlängenbereich beziehen.

2. Verfahren zur Herstellung von flächenförmigen Substraten gemäß Anspruch 1, dadurch gekennzeichnet, daß man mit Metallen der ersten oder achten Nebengruppe des Periodensystems der Elemente aktivierte Substratoberflächen stromlos in Metallisierungsbädern metallisiert, die eine polymere organische oberflächenaktive Verbindung mit einem Molekulargewicht von mindestens 400 enthalten.

3. Verfahren zur Herstellung von flächenförmigen Substraten gemäß Anspruch 1, dadurch gekennzeichnet, daß man Polymerkörperoberflächen mit einer Lösung einer metallorganischen Verbindung eines Metalls der ersten oder achten Nebengruppe des Periodensystems der Elemente aktiviert, die ein Quellmittel für den organischen Polymerkörper enthält, und die aktivierte Oberfläche in üblicher Weise stromlos naßchemisch metallisiert.

4. Verfahren nach Anspruch 2, dadurch gekennzeichnet, daß die polymeren Verbindungen neutrale, anionische oder kationische Dispersionen, Emulsionen oder Lacites bzw. Mischungen oder Verschnitte untereinander sind und in Mengen von 0,1-10 g/l homogen verteilt vorliegen.

5. Verfahren nach Anspruch 2, dadurch gekennzeichnet, daß die Substrate mit organischen in wäßrigen Lösungen quellbaren Polymeren, Dispersionen, Lacites, Emulsionen durch Tauchen, Bedrucken, Bespritzen beschichtet und nach dem teilweise oder völligen Entfernen des Lösungsmittels und Aktivieren in üblichen Metallisierungsbädern metallisiert werden.

6. Verfahren nach Anspruch 3, dadurch gekennzeichnet, daß der Polymerkörper nach seiner Aktivierung eine 0,01 bis 20 μm starke Quellschicht, die den zu reduzierenden Metallionen zugänglich ist, aufweist.

7. Verwendung der flächenförmigen Substrate gemäß Anspruch 1 als Kollektoren für Sonnenlicht.

**Claims**

1. Sheet-like substrates having a black-metallised surface, characterised in that this surface is a 0.01 to 2 μm thick black layer of copper, cobalt or nickel, which displays reflection of electromagnetic radiation within the wavelength range of 200 to 5,000 nm of at most 20 % and within the wavelength range of 7,000 to 24,000 nm of at least 50 %, the percentages relating to the mean value over the entire respective wavelength range.

2. Process for the production of sheet-like substrates according to Claim 1, characterised in that substrate surfaces activated with metals of the first or eighth subgroup of the periodic system of the elements are metallised in a currentless manner in metallising baths which contain a polymeric organic surface-active compound having a molecular weight of at least 400.

3. Process for the production of sheet-like substrates according to Claim 1, characterised in that surfaces of polymeric articles are activated with a solution of an organometallic compound of a metal of the first or eighth subsgroup of the periodic system of the elements which contains a swelling agent for the organic polymeric article, and the activated surface is metallised in a customary currentless, wet-chemical manner.

4. Process according to Claim 2, characterised in that the polymeric compounds are neutral, anionic or cationic dispersions, emulsions or latices or mixtures or blends thereof and are present in quantities of 0.1-10 g/l in homogeneous distribution.

5. Process according to Claim 2, characterised in that the substrates are coated by dipping, printing or spraying with organic polymers, dispersions, latices or emulsions which are swellable in aqueous solutions, and are metallised in customary metallising baths after some or all of the solvent has been removed and they have been activated.

6. Process according to Claim 3, characterised in that after it has been activated the polymeric article has a 0.01 to 20 μm thick swelled layer which is accessible to the metal ions to be reduced.

7. Use of the sheet-like substrates according to Claim 1 as collectors for sunlight.

**0 109 529**

### Revendications

1. Substrats en forme de surfaces, présentant une surface métallisée noire, caractérisés en ce que cette surface présente une couche noire d'une épaisseur de 0,01 à 2 $\mu$m en cuivre, cobalt ou nickel qui montre une réflexion du rayonnement électromagnétique dans la gamme de longueurs d'onde de 200 à 5 000 nm atteignant au plus 20 % et, dans la gamme des longueurs d'onde de 7 000 à 24 000 nm, d'au moins 50 %, les indications de pourcentage se rapportant à la valeur moyenne portant sur l'ensemble de la gamme de longueurs d'onde considérée.

2. Procédé de fabrication de substrats en forme de surfaces selon la revendication 1, caractérisé en ce qu'on métallise sans courant, avec des métaux du premier ou du huitième sous-groupe du système périodique des éléments, des surfaces activées de substrat dans des bains de métallisation qui contiennent un composé tensio-actif organique polymère ayant un poids moléculaire d'au moins 400.

3. Procédé de fabrication de substrats en forme de surfaces selon la revendication 1, caractérisé en ce qu'on active des surfaces de corps polymères avec une solution d'un composé organométallique d'un métal du premier ou du huitième sous-groupe du système périodique des éléments, laquelle contient un agent faisant gonfler le corps polymère organique et en ce qu'on métallise la surface activée de la manière usuelle sans courant par voie chimique humide.

4. Procédé selon la revendication 2, caractérisé en ce que les composés polymères sont des dispersions, émulsions ou latex neutres, anioniques ou cationiques, ou des mélanges ou coupages de ceux-ci entre eux et en ce qu'ils sont distribués de manière homogène en des quantités de 0,1 à 10 g/litre.

5. Procédé selon la revendication 2, caractérisé en ce qu'on enduit les substrats avec des polymères, dispersions, latex, émulsions organiques gonflables dans des solutions aqueuses, par trempage, impression, pulvérisation et en ce qu'après l'élimination partielle ou complète du solvant et activation, on métallise dans des bains de métallisation usuels.

6. Procédé selon la revendication 3, caractérisé en ce que le corps polymère après son activation présente une couche gonflée d'une épaisseur de 0,01 à 20 $\mu$m qui est accessible aux ions métalliques à réduire.

7. Utilisation des substrats en forme de surfaces selon la revendication 1 comme collecteurs de la lumière solaire.